# EUROPEAN PATENT APPLICATION

(11) **EP 4 442 726 A1**
(43) Date of publication of application: **09.10.2024**
(21) Application number: 23382328.5
(22) Date of filing: 05.04.2023
(51) Int. Cl.: C08G 59/22, C08G 59/36, C08G 59/50, C08G 59/68, C08L 63/00, C09D 163/00, C09J 163/00

(54) **MULTI-COMPONENT EPOXY RESIN COMPOSITION WITH ACCELERATED CURING**

(71) Applicant: Sika Technology AG, 6340 Baar (CH)
(72) Inventor: Sacristan, Javier, 28108 Alcobendas (Madrid) (ES); Dorado, Celia, 28108 Alcobendas (Madrid) (ES); Choffat, Fabien, 4522 Rüttenen (CH); Garcia, Ramiro, 28108 Alcobendas (Madrid) (ES); Hofstetter, David, 8405 Winterthur (CH); Montalbano, Antonino, 20877 Roncello (IT); Pámpanas, Pilar, 28108 Alcobendas (Madrid) (ES); Poltéra, Marco, 8048 Zürich (CH)
(74) Representative: Sika Patent Attorneys

(57) **Abstract**

The present invention relates to a multi-component epoxy resin composition, comprising
- a first component comprising
- at least one epoxy resin that contains on average more than one epoxy group per molecule;
- optionally at least one reactive diluent having one epoxy group per molecule;
- optionally further additives; and

- a second component comprising
- at least one amine hardener for epoxy resins;
- optionally further additives; and

- a third component consisting of
- an aqueous solution of at least one metal salt, wherein said solution contains between 20 parts by weight and 80 parts by weight, preferably between 30 parts by weight and 70 parts by weight, in particular between 40 parts by weight and 60 parts by weight, of said metal salt, based on 100 parts per weight of water is said aqueous solution;

wherein the weight ratio of the second component to the third component is between 100 : 0.3 and 100 : 10, preferably between 100 : 1 and 100 : 5.

The combination of the water-based curing-accelerating third component with common two-component epoxy resin compositions leads to significant curing acceleration of two-component epoxy resin compositions without the requirement for heating and without adversely affecting the properties of the cured epoxy resin composition.

## Description

### Technical Field

The present invention relates to multi-component epoxy resin compositions, their use as adhesives, sealants, or coatings, the use of an additional component to accelerate curing of two-component epoxy resin compositions, and a method for accelerated curing of a multi-component epoxy resin compositions.

### Prior Art

Epoxy resins provide an ideal matrix for the preparation of adhesives, sealants, or coatings due to their excellent properties, for example, superior chemical resistance, great thermal stability, good processability, and high adhesion strength. Epoxy adhesives are therefore used in many different sectors such as biochemical, construction, marine, aerospace, and refurbishment, among others. There are several types of curing agents for curing epoxy resins. A first distinction can be made between low temperature curing agents and high temperature curing agents. The high temperature curing agents require the application of heat to complete the cross-linking within a reasonable time. Representative of high temperature curing agents are polycarboxylic acids and their anhydrides, polycarboxylic acid polyhydrazides, polyhydric phenols and dicyandiamide. On the other side, among the common low temperature curing agents, in which application of heat is usually unnecessary, are polyamines such as polymers of alkylene amines. Other very efficient fast curing agents are imidazoles, thiols, amines (mostly alicyclic amines, aliphatic amines, and low molecular polyamide compounds) and complexes (such as boron trifluoride amine). The curing rate of amine curing agent from fast to slow is aliphatic amine > alicyclic amine > low molecular polyamide > aromatic amine. For epoxy-based systems, the curing process of the resin and the hardeners selected determine the mechanical and thermal properties together with workability and final application.

Particularly in the construction market. and specially at low temperatures, it is necessary to even accelerate more the curing process of the epoxy system reducing both production time and time to service interruptions.

In order to increase the rate of curing of epoxy resins, compounds called accelerators are typically employed to reduce the curing time of the system. Current solutions involve, for example, the addition or in situ generation of hydroxyl group containing substances or increase of the curing temperature, either by exothermal processes within the composition or by external heating.

Warmer temperatures facilitate curing and colder temperatures slow it down.

The accelerators typically used in the low temperature curing of epoxy resins are phenols such as hydroxybenzene and cresols. These compounds have the advantage of dissolving readily at ambient temperatures in most commonly used liquid amino curing agents and in liquid epoxy resins, and also exhibit good accelerating activity. However, typical phenol accelerators impart odor and toxicity to the resin, which prevents their use in certain applications. Benzoyl alcohol as another used accelerator is considered as a Semi-Volatile Organic Compound (SVOC). SVOCs tend to have a higher molecular weight and boiling point than the notorious VOCs, meaning they are less likely to become a vapor at room temperature. However, this does not mean they are any less dangerous. In fact, their presence in adhesives, even at very low concentration, prevents their classification in the low-emission products EMICODE certification, which is becoming the new standard in the construction market and one of the central factors for customer's buying decisions.

To overcome these deficiencies, the addition of other curing catalysts or accelerators to epoxy compositions was studied and has also been described in the literature.

US4668736A, for example, teaches the use of a metal salt catalyst, in particular selected from calcium nitrate, lanthanum nitrate, and other metal salts having calcium, strontium, or barium cations and perchlorate or trifluoromethane sulfonate anions to accelerate the curing of epoxy resin compositions. These salts are either added in solid form or dissolved in solvents such as ethylene glycol ethyl ether and are in this publication proposed as a good solution to accelerate the curing reaction of epoxy compositions based on glycidyl ether epoxide group-containing resins and amino-terminated curing agents. However, the addition of solvents is often undesired in epoxy resin compositions, as they might have an impact on VOC ratings and may alter the properties of the composition, for example by imparting a plasticizing effect or reducing the adhesive properties by migrating to the composition's surface.

Furthermore, other authors have proposed the use of aromatic, heterocyclic or cycloaliphatic polyamines as curing agent and salts of trifluoromethanesulfonic acid as a catalyst, for example in US4101459.

Recently it has also been reported fast curing epoxy resins prepared by the reactions of diglycidyl ether of bisphenol A with isophorone diamine (IPD) and N-(3-aminopropyl)-imidazole (API), as disclosed in J. Appl. Polym. Sci. 2019, 136, 47950.

Although curing rate may be accelerated by some of the abovementioned catalysts, in many cases mechanical properties such as peel strength, and tensile strength are adversely affected thereby. Their use, as it was mentioned previously, also prevents a favorable classification of the low-emission products EMICODE certification, which is becoming a new standard in the construction market.

These facts highlight the necessity of considering other factors, such as, toxicity, solubility, processing effects, final properties, regulatory concerns, cost and ease of use, before selecting/developing specific accelerators that are well-matched to or designed for specific applications.

Current two-component epoxy adhesives offer high mechanical properties, good adhesion to wide spectrum of substrates and good durability in contact with concrete but also present some limitations, such as limited curing rates at low temperatures. However, even if it is in principle viable to use heat externally or internally to speed up the curing reaction, it is often difficult or not even possible to apply heat homogeneously through thick adhesive layers, especially in construction sites.

Additionally, most of the fast-curing epoxy adhesives also have short pot life which makes it more complicated to use them in big areas of construction sites.

It would be desirable to have an accelerator that can be readily used with virtually any commercial two-component epoxy resin compositions and that can accelerate their curing at low temperatures, down to for example 2°C, by simply admixing it with the epoxy resin composition.

Therefore, there is a need for a simple, inexpensive, eco-friendly accelerator that, by admixing of the accelerator, accelerates the curing of two-component epoxy resin compositions along with rapid mechanical property development, while minimizing or eliminating any potential adverse effect on health and environment. In addition, the accelerator should be odorless and should not require either special EHS labelling or ADR certification for transportation and should not adversely affect the properties of the accelerated two-component epoxy resin compositions.

### Disclosure of the Invention

Accordingly, it is the object of the present invention to provide a simple, inexpensive, eco-friendly accelerator composition that, by admixing of the accelerator as additional component to common two-component epoxy resin compositions, accelerates the curing of the two-component epoxy resin compositions along with rapid mechanical property development even at low temperatures and without causing significant potential adverse effects on health and environment. In addition, the accelerator should be storage-stable, simple to handle and easily preparable from readily available materials, and it should not adversely affect the properties of the accelerated two-component epoxy resin compositions.

Surprisingly, it was found that by using an aqueous (water-based) solution of a metal salt as additional third component to be mixed into a two-component epoxy resin composition, thus creating a multi-component epoxy resin composition as defined in claim 1, this object can be achieved. Not only does this lead to a significantly accelerated curing and faster development of mechanical properties of the epoxy resin composition, at least in preferred embodiments it unexpectedly even improves the mechanical properties, in particular compressive strength and flexural strength, of two-component epoxy resin compositions. Furthermore, due to the fact that only very small amounts (for example < 3% by weight with respect to the hardener component) of this third component are necessary to be admixed to achieve these effects, the risk of altering the properties of the two-component epoxy resin composition, e,g., by imparting an undesired plasticizing effect, is very low. Thus, it can be added to virtually any amine-curing two-component epoxy resin composition without the need to reformulate or adapt the epoxy resin composition components.

The invention relates in a first aspect to a multi-component epoxy resin composition, comprising
- a first component **K1** comprising
   - at least one epoxy resin **A** that contains on average more than one epoxy group per molecule;
   - optionally at least one reactive diluent having one epoxy group per molecule;
   - optionally further additives; and
- a second component K2 comprising
   - at least one amine hardener B for epoxy resins;
   - optionally further additives; and
- a third component K3 consisting of
   - an aqueous solution of at least one metal salt M, wherein said solution contains between 20 parts by weight and 80 parts by weight, preferably between 30 parts by weight and 70 parts by weight, in particular between 40 parts by weight and 60 parts by weight, of said metal salt M, based on 100 parts per weight of water is said aqueous solution;
wherein the weight ratio of component **K2** to component **K3** is between 100 : 0.3 and 100 : 10, preferably between 100 : 1 and 100 : 5.

The main advantages achieved with this multi-component epoxy resin composition, with respect to existing current solutions of the state of the art, include:
The third (accelerator) component of the present invention is odorless and non-toxic, and it does not require either special EHS labelling or ADR, and thus would even be suitable for DIY applications. Apart from the beneficial EHS properties, the accelerator component is very simple and inexpensive in preparation, based on readily available raw materials, and storage-stable under any ambient conditions and exposure to air, sunlight, heat, and humidity.

The accelerating effect is achieved even at low temperatures down to 2°C and no heating is required.

The final mechanical and adhesive properties of the cured accelerated epoxy resin composition are not significantly adversely affected by adding the third component as defined in claim 1. Furthermore, at least in preferred embodiments, the accelerator component surprisingly even improves some of the key mechanical properties of the accelerated two-component epoxy resin composition after curing, including compressive and flexural strength.

Furthermore, due to the accelerating effect on the curing of two-component epoxy resin compositions even at low temperatures down to 2°C, the addition of the third accelerator component enables the use of otherwise slow curing two-component epoxy resin compositions in applications where heating is not possible. This eliminates or reduces the necessity to formulate additional epoxy resin compositions for every specific application.

Other aspects of the present invention are the subject matter of additional independent claims. Especially preferred embodiments are the subject matter of the dependent claims.

### Ways of carrying out the invention

In this entire text, the prefix "poly" in "polyisocyanate," "polyol," or "polyphenol", for example, indicates molecules that formally contain two or more of the respective functional groups.

The term "primary diamine" used in the present invention means a diamine having two terminal primary amino groups that does not contain additional secondary amino groups. An incorporation of secondary amino groups in the molecule has proven to be disadvantageous with regard to the branching possibilities of the amino group terminated impact strength modifier according to the invention in the consecutive reaction.

"Impact strength modifier" in this document means an additive to an epoxy resin matrix that, even for small additions, in particular additions of 0.1-15% by weight, causes a definite increase in toughness of the cured matrix, and thus higher bending, tensile, shock, or impact stresses can be withstood before the matrix cracks or fractures. Typically, the impact peel strength according to ISO 11343 is used as a measure of the impact strength. Here, the fracture energy (BE) is indicated as the area under the measurement curve (from 25% to 90%, according to ISO 11343). Typically, the impact peel strength according to ISO 11343 can be used as another measure of the impact strength.

The term "Elastic Modulus" refers, if not otherwise specified, to the modulus of elasticity (in the elongation range of 0.05-0.25%) as measured according to DIN EN ISO 527.

The term "polymer" as used in the present document, on the one hand, refers to a collective of chemically uniform macromolecules prepared by a polyreaction (polymerization, polyaddition, polycondensation) where, however, the macromolecules differ with respect to their degree of polymerization, molecular weight, and chain length. On the other hand, the term also comprises derivatives of said collective of macromolecules resulting from polyreactions, that is, compounds which were obtained by reactions such as, e.g., additions or substitutions, of functional groups in predetermined macromolecules and which may be chemically uniform or chemically nonuniform. Moreover, the term also comprises so-called prepolymers, that is, reactive organic pre-adducts, the functional groups of which participate in the formation of macromolecules.

In this document, the use of the term "independently of one another" in connection with substituents, moieties or groups should be interpreted such that substituents, moieties or groups with the same designation may be present simultaneously in the same molecule with different definitions.

The term "room temperature" ("RT") refers to a temperature of 23°C, if not otherwise specified.

All industrial standards and norms cited refer to the most recent versions at the time of first filing of this patent application, if not otherwise specified.

The terms "weight" refers in this document to the mass of a compound or composition as measured in kilograms.

The abbreviation "ADR", formally the Agreement of 30 September 1957 concerning the International Carriage of Dangerous Goods by Road is a 1957 United Nations treaty that governs transnational transport of hazardous materials.

The abbreviation "EHS" stands for "Environment, health and safety".

### Component K1

The first component **K1** comprises
- at least one epoxy resin **A** that contains on average more than one epoxy group per molecule;
- optionally at least one reactive diluent having one epoxy group per molecule;
- optionally further additives.

The first component **K1** comprises first of all at least one epoxy resin **A** that contains on average more than one epoxy group per molecule.

The epoxy resin **A** contained in the first component **K1** of the composition may be any conventional di- or multifunctional epoxy resin used in this field. Suitable epoxy resins are available e.g., from the reaction of an epoxide compound such as e.g., epichlorohydrin with a polyfunctional aliphatic or aromatic alcohol, i.e., a diol, triol or polyol. One or more epoxy resins may be used.

The epoxy resin **A** that contains on average more than one epoxy group per molecule is preferably a liquid epoxy resin and/or a solid epoxy resin.

The term "solid epoxy resin" is very well known to a person skilled in the art of epoxides and is used in contrast to "liquid epoxy resins". The glass transition temperature of solid resins is above room temperature, i.e., they can be comminuted to free-flowing powders at room temperature.

Suitable as an epoxy liquid resin or solid epoxy resin is in particular a diglycidyl ether, e.g., of the formula (I) 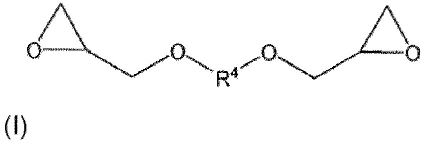 wherein R⁴ is a divalent aliphatic or mononuclear aromatic or a dinuclear aromatic radical.

Examples of such diglycidyl ethers are in particular diglycidyl ethers of difunctional saturated or unsaturated, branched or unbranched, cyclic or open-chain C₂-C₃₀ alcohols, such as e.g., ethylene glycol, butanediol, hexanediol, or octanediol glycidyl ether, cyclohexane dimethanol diglycidyl ether, neopentyl glycol diglycidyl ether; Diglycidyl ethers of difunctional, low to high molecular weight polyether polyols, e.g. polyethylene glycol diglycidyl ether, polypropyleneglycol diglycidyl ether;
Diglycidyl ethers of difunctional diphenols and optionally triphenols, which are understood not only pure phenols, but optionally also substituted phenols.

The type of substitution can be very diverse. In particular, this is understood to mean a substitution directly on the aromatic nucleus to which the phenolic OH group is bonded. In addition, phenols are understood to mean not only mononuclear aromatics but also polynuclear or condensed aromatics or heteroaromatics which have the phenolic OH group directly on the aromatic or heteroaromatic compounds. As bisphenols and, optionally, triphenols, 1,4-dihydroxybenzene, 1,3-dihydroxybenzene, 1,2-dihydroxybenzene, 1,3-dihydroxytoluene, 3,5-dihydroxybenzoate, 2,2-bis (4-hydroxyphenyl) are, for example, suitable. propane (= bisphenol-A), bis (4-hydroxyphenyl) methane (= bisphenol-F), bis (4-hydroxyphenyl) sulfone (= bisphenol-S), naphthoresorcinol, dihydroxynaphthalene, dihydroxyanthraquinone, dihydroxy-biphenyl, 3,3- Bis (p-hydroxyphenyl) phthalide, 5,5-bis (4-hydroxy-phenyl) hexahydro-4,7-methanoindane, phenolphthalein, fluorescein, 4,4 '- [bis (hydroxyphenyl) -1,3-phenylenebis (1-methyl-ethylidene)] (= bisphenol-M), 4,4 '- [bis (hydroxyphenyl) -1,4-phenylenebis (1-methyl-ethylidene)] (= bisphenol-P), 2,2'-diallyl-bisphenol-A, diphenols and dicresols prepared by reacting phenols or cresols with diisopropylidenbenzene, phloroglucin, bile acid esters, phenol or cresol novolaks with -OH functionality of 2.0 to 3.5 and all isomers the aforementioned compounds.

### Preferred solid epoxy resins A have the formula (II)

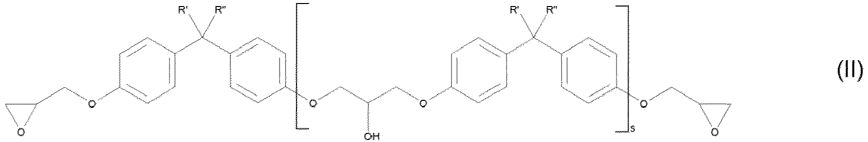

In this formula, the substituents R' and R" are each independently H or CH₃. In addition, the index s has a value of > 1.5, in particular of 2 to 12.

Such solid epoxy resins are commercially available, for example from Dow, Huntsman or Hexion.

Compounds of the formula (II) with an index s between 1 and 1.5 are referred to by a person skilled in the art as semisolid epoxy resins. For this present invention, they are likewise considered to be solid resins. However, preferred are epoxy resins in the narrower sense, i.e. the index s has a value of >1.5.

Preferred liquid epoxy resins **A** have the formula (III)

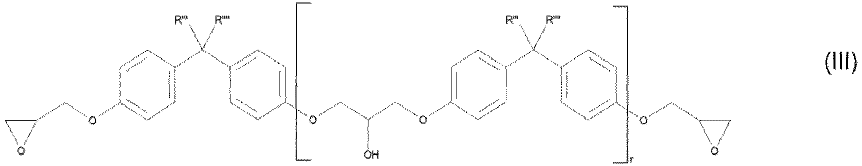

In this formula, the substituents R‴ and Rʺʺ are each independently H or CH₃. In addition, the index r has a value of 0 to 1. Preferably, r has a value of less than 0.2.

These are thus preferably diglycidyl ethers of bisphenol A (DGEBA), of bisphenol F and of bisphenol A/F (here, the designation "A/F" refers to a mixture of acetone with formaldehyde which is used as the reactant in the preparation thereof). Such liquid resins are available, for example, as Araldite^{®} GY 250, Araldite^{®} PY 304, Araldite^{®} GY 282 (Huntsman), or D.E.R.^{™} 331, or D.E.R. ^{™} 330 (Olin), or Epikote 828 (Hexion).

Moreover, so-called novolacs are suitable epoxy resins **A.** These have in particular the following formula: 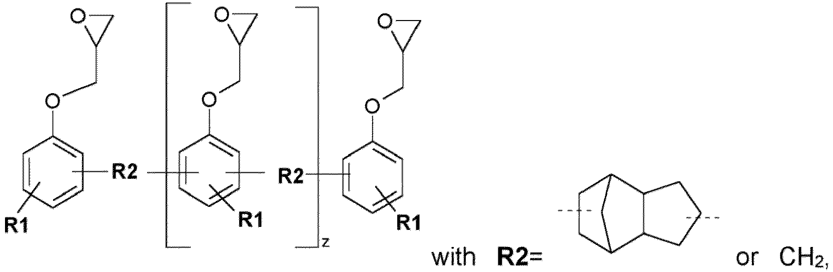 **R1** = H or methyl and z = 0 to 7.

In particular, they are phenol or cresol novolacs (**R2** = CH₂).

Such epoxy resins are commercially available under the trade names EPN or ECN as well as Tactix^{®}556 from Huntsman or under the product line D.E.N. ^{™} from Dow Chemical.

Preferably, the epoxy resin **A** is a liquid epoxy resin of the formula (III). In an even more preferred embodiment, the heat-curing epoxy resin composition contains at least one liquid epoxy resin of formula (III) as well as at least one solid epoxy resin of formula (II).

Particular preference is given to bisphenol A diglycidyl ether, bisphenol F diglycidyl ether or bisphenol A / F diglycidyl ether, in particular Araldite^{®} GY 240, Aralite^{®} GY 250, Araldite^{®} GY 281, Araldite^{®} GY 282, Araldite^{®} GY 285, Araldite^{®} PY 304 or Araldite^{®} PY 720 (all from Huntsman), or DER ^{®} 330, D.E.R. ^{®} 331, D.E.R. ^{®} 332, D.E.R. ^{®} 336, D.E.R. ^{®} 351, D.E.R. ^{®} 352, D.E.R. ^{®} 354 or D.E.R. ^{®} 356 (all from Olin), or novolak glycidyl ether.

Preferred is a novolak glycidyl ether that is derived from phenolformaldehyde novolaks, which are also referred to as epoxy phenol novolac resins.

Such novolac glycidyl ethers are commercially available, for example from Olin, Huntsman, Momentive or Emerald Performance Materials. Preferred types are D.E.N. ^{®} 431, D.E.N. ^{®} 438 or D.E.N. ^{®} 439 (from Olin), Araldite^{®} EPN 1179, Araldite^{®} EPN 1180, Araldite^{®} EPN 1182 or Araldite^{®} EPN 1183 (from Huntsman), Epon^{®} 154, Epon^{®} 160 or Epon^{®} 161 (from Momentive) or Epalloy^{®} 8250, Epalloy^{®} 8330 or Epalloy^{®} 8350 (from Emerald Performance Materials).

The proportion of epoxy resin **A** is preferably 10-50% by weight, in particular 15-40% by weight, more preferably 20-30% by weight, based on the weight of component **K1.**

Additionally, the composition may optionally comprise at least one reactive diluent having one epoxy group per molecule in component **K1.** Also possible are small molecule diglycidyl ethers as additional reactive diluents.

These reactive diluents are in particular:
- glycidyl ethers of monofunctional saturated or unsaturated, branched or unbranched, cyclic or open-chain C₄-C₃₀ alcohols, in particular selected from the group consisting of butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether.
- glycidyl ethers of difunctional saturated or unsaturated, branched or unbranched, cyclic or open-chain C₂-C₃₀ alcohols, in particular selected from the group consisting of ethylene glycol, butanediol, hexanediol, or octanediol glycidyl ethers, cyclohexane dimethanol diglycidyl ether and neopentyl glycol diglycidyl ether,
- glycidyl ethers of tri- or polyfunctional, saturated or unsaturated, branched or unbranched, cyclic or open-chain alcohols, such as epoxidized castor oil, epoxidized trimethylolpropane, epoxidized pentaerythritol or polyglycidyl ethers of aliphatic polyols such as sorbitol, glycerol or trimethylol propane.
- glycidyl ethers of phenol and aniline compounds, in particular selected from the group consisting of phenyl glycidyl ether, cresyl glycidyl ether, p-tert-butyl-phenyl glycidyl ether, nonylphenol glycidyl ether, 3-n-pentadecenyl glycidyl ether (from cashew nutshell oil), N,N-diglycidyl aniline and triglycidyl of p-aminophenol.
- epoxidized amines such as N,N-diglycidyl cyclohexylamine.
- epoxidized mono- or dicarboxylic acids, in particular selected from the group consisting of glycidyl neodecanoate, glycidyl methacrylate, glycidyl benzoate, diglycidyl phthalate, tetra- and hexahydrophthalate and diglycidyl esters of dimeric fatty acids and diglycidyl esters of terephthalic acid and trimellitic acid.
- epoxidized di- or trifunctional, low to high molecular weight polyether polyols, in particular polyethylene glycol diglycidyl ether or polypropylene glycol diglycidyl ether.

Particularly preferred are hexanediol diglycidyl ether, cresyl glycidyl ether, p-tert-butylphenyl glycidyl ether, polypropylene glycol diglycidyl ether and polyethylene glycol diglycidyl ether.

Advantageously, the total proportion of the reactive diluent is from 0.1 to 10% by weight, preferably from 1 to 5% by weight, based on the weight of component K1.

Preferably, the weight ratio between epoxy resins A and epoxy group-containing reactive diluents in component **K1** is in the range of 60/40 to 95/5, in particular 70/30 to 95/10.

Preferably, the epoxy-functional compounds in epoxy resin **A** and optionally reactive diluent in component **K1** are selected from liquid bisphenol A diglycidyl ethers, liquid bisphenol F diglycidyl ethers, C12/C14-alkyl monoglycidyl ethers, diglycidyl ether of 1.6-hexanediol, diglycidyl ether of 1,4-butanediol, and combinations thereof.

Apart from these ingredients, component **K1** may optionally comprise further additives which are discussed below.

### Component K2

The second component **K2** comprises
- at least one amine hardener **B** for epoxy resins;
- optionally further additives.

Second component **K2** comprises first of all at least one amine hardener **B** for epoxy resins.

This hardener is preferably comprised with an amount of between 4 and 50 wt.-%, preferably between 5 and 40 wt.-%, in particular between 7 and 25 wt.-%, based on the total weight of component **K2.**

This hardener **B** is preferably a compound or a mixture of compounds selected from the group consisting of poly(ethyleneimines), polyamidoamines, amino group terminated butadiene/acrylonitrile copolymers and polyamines.

### Examples of suitable hardeners B include, for example

◆aliphatic, cycloaliphatic or arylaliphatic primary diamines,
   e.g., ethylenediamine, 1,2-propanediamine, 1,3-propanediamine, 2-methyl-1,2-propanediamine, 2,2-dimethyl-1,3-propanediamine, 1,3-butanediamine, 1,4-butanediamine, 1,3-pentanediamine (DAMP), 1,5-pentanediamine, 1,5-diamino-2-methylpentane (MPMD), 2-butyl-2-ethyl-1,5-pentanediamine (C11-neodiamine), 1,6-hexanediamine, 2,5-dimethyl-1,6-hexanediamine, 2,2,4- and 2,4,4-trimethylhexamethylenediamine (TMD), 1,7-heptanediamine, 1,8-octanediamine, 1,9-nonanediamine, 1,10-decanediamine, 1,11-ecanediamine, 1,12-dodecanediamine, 1,2-, 1,3- and 1,4-diaminocyclohexane, bis-(4-aminocyclohexyl)methane (H₁₂-MDA), bis-(4-amino-3-methylcyclohexyl)methane, bis-(4-amino-3-ethylcyclohexyl)methane, bis-(4-am ino-3, 5-d imethylcyclohexyl)methane, bis-(4-amino-3-ethyl-5-methylcyclohexyl)methane (M-MECA), 1-amino-3-aminomethyl-3,5,5-trimethylcyclohexane (= isophoronediamine or IPDA), 2- and 4-methyl-1,3-diaminocyclohexane and mixtures thereof, 1,3- and 1,4-bis-(aminomethyl)cyclohexane, 2,5(2,6)-bis-(aminomethyl)-bicyclo[2.2.1]heptane (NBDA), 3(4),8(9)-bis-(aminomethyl)-tricyclo[5.2.1.0^{2,6}]decane 1,4-diamino-2,2,6-trimethylcyclohexane (TMCDA), 1,8-menthanediamine, 3,9-bis-(3-aminopropyl)-2,4,8,10-tetraoxaspiro[5.5]undecane and 1,3- and 1,4-xylylenediamine;
◆aliphatic primary diamines containing ether groups,
   e.g., bis(2-aminoethyl)ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-tgrioxatridecane-1,13-diamine and higher oligomers of these diamines, bis-(3-aminopropyl)polytetrahydrofuranes and other polytetrahydrofuranediamines having molecular weights ranging, e.g., from 350 to 2000, as well as polyoxyalkylenediamines. Typically, the latter are products of the amination of polyoxyalkylene diols and can, for example, be obtained under the name Jeffamine^{®} (from Huntsman), under the name Polyetheramin (from BASF) or under the name PC Amine^{®} (from Nitroil). Particularly suitable polyoxyalkylenediamines are Jeffamine^{®} D-230, Jeffamine^{®} D-400, Jeffamine^{®} D-2000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramin D 230, Polyetheramin D 400, and Polyetheramin D 2000, PC Amine^{®} DA 250, PC Amine^{®} DA 400, PC Amine^{®} DA 650, and PC Amine^{®} DA 2000;
◆Polyamines having secondary amino groups,
   e.g., diethylenetriamine (DETA), dipropylenetriamine (DPTA), bishexamethylenetriamine (BHMT), 3-(2-aminoethyl)aminopropylamine, N3-(3-aminopentyl)-1,3-pentanediamine, N5-(3-aminopropyl)-2-methyl-1,5-pentanediamine, N5-(3-amino-1-ethylpropyl)-2-methyl-1,5-pentanediamine, N,N'-dibutylethylenediamine; N,N'-di-tert.butyl-ethylenediamine, N,N'-diethyl-1,6-hexanediamine, 1-(1-methylethylamino)-3-(1-methylethylaminomethyl)-3,5,5-trimethylcyclohexane (Jefflink^{®} 754 from Huntsman), N4-cyclohexyl-2-methyl-N2-(2-methylpropyl)-2,4-pentanediamine, N,N'-dialkyl-1,3-xylylenediamine, bis-(4-(N-alkylamino)cyclohexyl)methane, 4,4'-trimethylenedipiperidine, N-alkylated polyetheramines, e.g., the Jeffamine^{®} types SD-231, SD-401, SD-404, and SD-2001 (from Huntsman);
◆amine/polyepoxide addition products,
   in particular additions products of the mentioned polyamines with diepoxides with a molar ratio of at least 2/1, in particular with a molar ration from 2/1 to 6/1;
◆Polyamidoamines
   which are the reaction products of a mono- or polybasic carboxylic acid or the esters or anhydrides thereof, in particular the reaction products of a dimer fatty acid, and a aliphatic, cycloaliphatic or aromatic polyamine used in a stoichiometric excess, in particular a polyalkyleneamine such as, e.g., DETA or triethylenetetramine (TETA), in particular the commercially available polyamidoamines Versamid^{®} 100, 125, 140, and 150 (from Cognis), Aradur^{®} 223, 250, and 848 (from Huntsman), Euretek^{®} 3607, Euretek^{®} 530 (from Huntsman), Beckopox^{®} EH 651, EH 654, EH 655, EH 661, and EH 663 (from Cytec);
◆Polyethyleneimines (PEI).
   These are branched polymeric amines derived from the polymerization of ethyleneimine. A suitable polyethyleneimine typically has an average molecular weight in the range from 250 to 25,000 g/mol and contains tertiary, secondary, and primary amino groups. Polyethyleneimines can be obtained, for example, under the trade name Lupasol^{®} (from BASF), for example, the types Lupasol^{®} FG, Lupasol^{®} G20, and Lupasol^{®} PR 8515.
◆Cashew nutshell based amines
   These are reaction products from cardanol, the main component of cashew nutshell liquid (CNSL) and amines, leading to phenalkamine structures. These are rewewable raw materials with very good properties for use as hardener **B.**

Suitable polyamines as hardener **B** are in particular polyoxyalkylenediamines having molecular weights of less than 500 g/mol (Jeffamine^{®} D-230, Jeffamine D400, Jeffamine^{®} EDR-148), 4,7,10-trioxatridecane-1-13-diamine, 4,9-dioxadodecane-1,12-diamines, ethylendiamine, and/or 3(4),8(9)-bis(aminomethyl)tricyclo[5.2.1.0^{2,6}]decane (TCD-Diamin^{®}, manufactured by Celanese Chemicals). It has been shown that in particular polyethyleneimines having a molecular weight Mw of less than 100,000 g/mol, in particular of less than 50,000 g/mol are particularly suitable.

In particular, polyamines that preferably are diamines or triamines, are selected from the group consisting of aliphatic diamines or triamines containing ether groups, in particular polyoxyalkylenediamines and -triamines; in particular polyoxyethylenediamines and -triamines, polyoxypropylenediamines and - triamines; polyoxybutylenediamines and -triamines, amino group terminated polybutadienes and butadiene/acrylonitrile copolymers or a mixture thereof.

In particular, these are polyoxyalkylene polyamines having two or three amino groups such as are commercially available, for example, under the name Jeffamine^{®} (from Huntsman Chemicals), under the name Polyetheramin (from BASF) or under the name PC Amine^{®} (from Nitroil) and mixtures of the above-mentioned polyamines.

Furthermore, the hardener component **K2** may comprise an accelerator. Suitable accelerators are substances which accelerate the reaction between amino groups and epoxide groups, in particular acids or compounds hydrolyzable to acids, in particular organic carboxylic acids such as acetic acid, benzoic acid, salicylic acid, 2-nitrobenzoic acid, lactic acid, organic sulfonic acids such as methanesulfonic acid, p-toluenesulfonic acid or 4-dodecylbenzenesulfonic acid, sulfonic acid esters, other organic or inorganic acids such as in particular phosphoric acid, or mixtures of the abovementioned acids and acid esters; Tertiary amines such as in particular the already mentioned accelerator B, or 1,4-diazabicyclo [2.2.2] octane, triethanolamine, imidazoles such as in particular N-methylimidazole, N-vinylimidazole or 1,2-dimethylimidazole, salts of such tertiary amines, quaternary ammonium salts, in particular benzyltrimethylammonium chloride, amidines, in particular 1,8-diazabicyclo[5.4.0]undec-7-enes, guanidines, in particular 1,1,3,3-tetramethylguanidine, phenols, in particular bisphenols, phenol-resins or Mannich bases such as in particular 2,4,6-tris(dimethylaminomethyl) phenol or 2,4,6-tris (N, N-dimethyl-4-amino-2-azabutyl)phenol, phosphites such as in particular di- or triphenyl phosphites, or mercapto-containing compounds. Preferred as accelerators are acids, tertiary amines or Mannich bases.

Most preferred among those is salicylic acid or 2,4,6-tris(dimethylaminomethyl)phenol or 2,4,6-tris(N,N-dimethyl-4-amino-2-azabutyl) phenol or a combination thereof.

Furthermore preferred as accelerators are in particular compounds comprising at least one dimethylamino group. in particular benzyldimethylamine, α-methylbenzyldimethylamine, N,N-diethyl-N',N'-dimethyl-1,3-propanediamine, N, N-dimethylethanolamine, 3-(N,N-dimethylamino)propane-1-ol, 2- or 4- (dimethylaminomethyl)phenol, 2,4- or 2,6-bis(N,N-dimethylaminomethyl)phenol, 2,4,6-tris(N,N-dimethylaminomethyl)phenol, 2,4,6-tris(N,N-dimethyl-4-amino-2-azabutyl)phenol or in particular N,N,N',N'-tetra-methyl-1,2-ethanediamine, N,N,N',N'-tetramethyl-1,3-propanediamine, N,N,N',N'-tetramethyl-1,4-butanediamine, N,N,N',N'-tetramethyl-1,6-hexanediamine, N, N, N', N', N"-pentamethyldiethylenetriamine, N,N,N',N',N"- Pentamethyldipropylentriamine, N,N,N',N',N"-pentamethyl-N-(2-aminoethyl)-1,3-propanediamine, N,N-dimethyl-1,2-ethanediamine, N,N-dimethyl-1,3-propanediamine, N,N-dimethyl-1,4-butanediamine, N,N-dimethyl-1,6-hexanediamine, 2-(2-(dimethylamino)ethylamino)ethylamine, 2-(3-(dimethylamino)propylaminoethylamine, 3-(2-(dimethylamino)ethylamino) propylamine, 3-(3-(dimethylaminopropylamino)propylamine (DMAPAPA), Bis (2-(N,N-dimethylamino)ethyl) amine or bis(3-(N,N-dimethylamino)propyl) amine.

Particularly preferred is N,N,N',N',N"-pentamethyldiethylenetriamine, 3-(3-(dimethylamino)propylamino)propylamine (DMAPAPA) or bis(3-(N,N-dimethylamino)propyl)amine. These accelerators are easily available, have low odor and enable high compressive strengths, high adhesive forces and hardly any curing problems in the cold. Most preferred as accelerator is 3-(3-(dimethylamino)propylamino)propylamine (DMAPAPA). DMAPAPA has a low odor, is toxicologically safe and commercially available.

Furthermore, the composition may comprise at least one impact strength modifier I in either one or both of components **K1** and **K2.**

Impact strength modifiers **I** has, for example, the advantage that it increases the toughness of the epoxy resin composition.

Preferably, the composition comprises between 3 and 25 wt.-%, preferably between 4 and 20 wt.-%, in particular between 5 and 15 wt.-%, based on the total weight the sum of components **K1** and **K2,** of at least one impact strength modifier I in either one or both of components **K1** and **K2.** This amount refers to the pure active impact modifier without solvents or other solid or liquid additives commonly used for better storage, handling, dispersion, dilution, or other purposes.

Suitable impact strength modifiers I include, for example core-shell polymers. Core-shell polymers consist of an elastic core polymer and a rigid shell polymer. Particularly suitable core-shell polymers consist of a core (core) of elastic acrylate or butadiene polymer that wraps around a rigid shell of a rigid thermoplastic polymer. This core-shell structure is formed either spontaneously by demixing a block copolymer or is predetermined by the polymerization as latex or suspension polymerization with subsequent grafting.

Preferred core-shell polymers are so-called MBS polymers, which are commercially available under the trade name Clearstrength^{®} from Arkema, Paraloid^{®} from Dow (formerly Rohm and Haas) or F-351^{®} from Zeon. Particularly preferred are core-shell polymer particles which are already present as dried polymer latex. Examples are GENIOPERL^{®} M23A from Wacker with polysiloxane core and acrylate shell, radiation-crosslinked rubber particles of the NEP series, manufactured by Eliokem, or Nanoprene^{®} from Lanxess or Paraloid^{®} EXL from Dow. Other comparable examples of core-shell polymers are offered under the name Albidur^{®} from Evonik Hanse GmbH, Germany. Also suitable are nanoscale silicates in an epoxy matrix, such as those offered under the trade name Nonopox from Evonik Hanse GmbH, Germany.

Furthermore suitable as impact strength modifier I is a liquid rubber that is a carboxyl or epoxide terminated acrylonitrile / butadiene copolymer or a derivative thereof. Such liquid rubbers are e.g. commercially available under the name Hypro^{®} (formerly Hycar^{®}) CTBN and CTBNX and ETBN from Emerald Performance Materials LLC. Derivatives which are particularly epoxy-containing elastomer-modified prepolymers, such as those under the product line Polydis^{®}, preferably from the product line Polydis^{®} 36, from the company Struktol^{®} (Schill + Seilacher Group, Germany) or under the product line Albipox^{®} (Evonik Hanse GmbH, Germany). In another embodiment, the impact modifier is a polyacrylate liquid rubber that is completely miscible with liquid epoxy resins and segregates into micro-droplets only upon curing of the epoxy resin matrix. Such polyacrylate liquid rubbers are e.g. available under the designation 20208-XPA from Dow (formerly Rohm and Haas).

It is clear to the person skilled in the art that, of course, mixtures of liquid rubbers can also be used, in particular mixtures of carboxyl- or epoxide-terminated acrylonitrile / butadiene copolymers or derivatives thereof with epoxy-terminated or otherwise functionalized polyurethane prepolymers.

Also suitable as impact strength modifier I is a reaction product of a carboxylated solid nitrile rubber with excess epoxy resin.

Furthermore suitable as impact strength modifier I is a polymer of the formula (IV) containing epoxide groups.

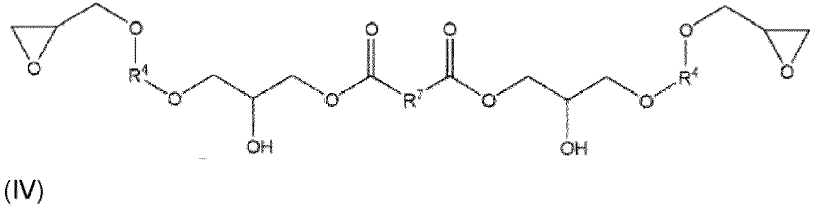

Herein, R⁷ is a divalent radical of a carboxyl group-terminated butadiene / acrylonitrile copolymer (CTBN) after removal of the terminal carboxyl groups. The radical R⁴ is as defined and described above for formula (I).

Such epoxy-functional impact modifiers should only be present in component **K1.**

Also suitable as impact strength modifier **I** is a polymer of the formula (V).

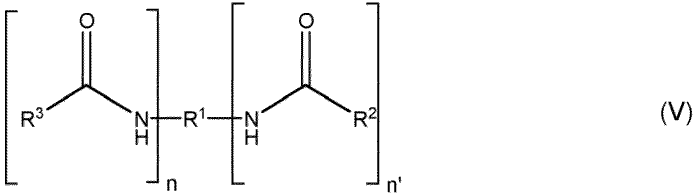

In this formula, n and n' independently of one another are each values of from 0 to 7, preferably 0 or 1 or 2, provided that n + n' is a value of from 1 to 8, in particular 1 or 2.

Moreover, R¹ is a linear or branched polyurethane prepolymer terminated with n+n' isocyanate groups, after removal of all terminal isocyanate groups. R² and R³ are independently of one another aliphatic, cycloaliphatic, aromatic, or arylaliphatic groups with 1 to 20 C atoms and optionally heteroatoms selected from O, N, and S, in particular O and N.

If the substituents R² and R³ are reactive toward epoxy groups, the impact strength modifier I of the formula (V) is a part of the component **K2.** If the substituents R² and R³ are reactive toward amino groups, the impact strength modifier **I** of the formula (V) is a part of the hardener component **K1.** Non-reactive such impact modifiers or those that are compatible with both components **K1** and **K2** may be integrated in either one or both of components **K1** or **K2.** This principle applies to all impact modifiers, not only those of formula (V).

In a preferred embodiment of an impact strength modifier according to formula (V), R¹ is a linear polyurethane prepolymer containing at least n+n' terminal isocyanate groups, after removal of n+n' terminal isocyanate groups;
R² and R³ are residues of cardanol after removal of the hydroxyl H atom and are bonded via the oxygen atom.

Cardanol (CAS registry number: 37330-39-5) is a phenolic lipid obtained from anacardic acid, the main component of cashew nutshell liquid (CNSL), a byproduct of cashew nut processing. The name of the substance is derived by contraction from the genus *Anacardium,* which includes the cashew tree, *Anacardium occidentale.* Apart from being an especially efficient impact strength modifier, this cardanol-endcapped impact-modifier **I** has the advantage of being partially based on natural, renewable resources and it is inexpensive.

Cardanol is commercially available, for example under the trade name Cardolite^{®} NC-700 by Cardolite Corporation

Also suitable as impact strength modifier **I** is a block copolymer, in particular a solid block copolymer. The block copolymer may be obtained from an anionic or controlled radical polymerization of methacrylic acid ester with at least one further monomer having an olefinic double bond. Preferred monomers having an olefinic double bond are those in which the double bond is conjugated directly with a heteroatom or with at least one further double bond. In particular, monomers are suitable which are selected from the group comprising styrene, butadiene, acrylonitrile and vinyl acetate. Preferred are acrylate-styrene-acrylic acid (ASA) copolymers, available e.g., under the name GELOY^{®} 1020 from GE Plastics. Particularly preferred block copolymers are block copolymers of methyl methacrylate, styrene and butadiene. Such block copolymers are available, for example, as triblock copolymers under the group name SBM from Arkema.

Furthermore suitable as impact strength modifier **I** is an amino group terminated acrylonitrile/butadiene copolymer that is a part of the hardener component **K2.**

Also suitable as impact strength modifier **I** are epoxy group-terminated polyurethane polymers wherein first a prepolymer is prepared from a di-/triisocyanate, a polymer polyol and an alkoxylated bisphenol, and this is then reacted with an epoxy compound containing a primary or secondary hydroxyl group. These are described in EP 1 972 646 A1.

Furthermore suitable impact strength modifiers **I** are described in EP 2 917 254 A1 and EP 2 917 255 A1.

Preferably, the weight ratio of all epoxy-functional compounds in the composition (e.g. epoxy resin **A,** reactive diluent) to the pure impact strength modifier **I** within the composition (without any solvents, additives, etc.) is between 1 and 3 (w/w), preferably between 1.2 and 2.9 (w/w), more preferably between 1.3 and 2.7 (w/w). This ratio enables an especially efficient toughening of the composition beneficial mechanical properties can thus be achieved using a broad range of different impact strength modifiers **I.** It is noteworthy that epoxy-functional impact strength modifiers are not considered as epoxy-functional compounds in this calculation, but always as impact strength modifiers **I.** Otherwise functionalized impact strength modifiers (for example, having amino groups) are of course also always accounted as impact strength modifier **I** in the calculation of the weight ratio.

Furthermore, the composition preferably comprises at least one filler F in either or both of components **K1** and **K2.**

Preferably, the composition comprises between 15 and 80 wt.-%, preferably between 17 and 70 wt.-%, in particular between 20 and 60 wt.-%, based on the total weight of the combination of components **K1** and **K2,** of at least one filler **F** in either one or both of components **K1** and **K2.**

The use of fillers is advantageous in that they improve the aging resistance of the adhesive and advantageously influence the mechanical properties.

Suitable as filler **F** are inorganic and organic fillers, for example, ground or precipitated calcium carbonates, optionally coated with fatty acids, in particular stearates, barium sulfate (heavy spar), talcs, quartz flours, quartz sands, dolomites, wollastonites, kaolins, mica (potassium aluminum silicate), molecular sieves, aluminas, aluminum hydroxides, silicas (pyrogenic or precipitated), cristobalite, cements, gypsums, flue ashes, carbon blacks, graphite, metal powders such as aluminum, copper, iron, silver, or steel, PVC powders or hollow spheres, such as solid or hollow glass spheres and organic hollow spheres.

Furthermore suitable as filler **F** are layer minerals, in particular layered minerals exchanged with organic ions. The ion-exchanged layered mineral may be either a cation-exchanged or an anion-exchanged layered mineral. It is also possible that the adhesive simultaneously contains a cation-exchanged layered mineral and an anion-exchanged layered mineral. Such layered minerals may have the additional advantage of acting as corrosion inhibitors. If this the case and those minerals have a significant anti-corrosion effect, they should in the meaning of this invention be attributed to the anti-corrosion agents discussed further below.

The cation-exchanged layered mineral is thereby obtained from a layered mineral in which at least part of the cations have been replaced by organic cations. Examples of such cation-exchanged layered minerals are, in particular, those mentioned in US Pat. No. 5,707,439 or in US Pat. No. 6,197,849. Described there is also the process for the preparation of these cation-exchanged layer minerals. Preferred as a layer mineral is a layered silicate. The layer mineral is particularly preferably a phyllosilicate, as described in US Pat. No. 6,198,849, column 2, line 38, to column 3, line 5, in particular a bentonite. Layer minerals such as kaolinite or a montmorillonite or a hectorite or a Illite have proven to be particularly suitable.

Preferred cation-exchanged layer minerals are known to the person skilled in the art under the name Organoclay or Nanoclay and are commercially available, for example, under the group names Tixogel^{®} (Byk Additives & Instruments) or Nanofil^{®} (Byk Additives & Instruments), Cloisite^{®} (or Nanomer^{®} (Nanocor Inc.) or Garamite^{®} (Byk Additives & Instruments).

The anion-exchanged layered mineral may be obtained from a layered mineral in which at least some of the anions have been exchanged for organic anions. An example of an anion-exchanged layered mineral is a hydrotalcite in which at least part of the carbonate anions of the intermediate layers have been replaced by organic anions.

The filler F preferably comprises particles with a mean particle size of at least 0.1 to 1 mm, preferably at least 0.2 to 2 mm, in particular at least 0.5 to 5 mm.

This offers the additional advantage that such large filler particles act as spacers that ensure a sufficiently thick adhesive layer and prevent the squeezing out of the adhesive material when the strengthening element **S** is pressed onto the applied adhesive.

The mean particle size of filler **F** is commonly determined by methods such as dynamic light scattering or, preferably, sieve analysis according to ASTM C136-06.

Moreover, the multi-component epoxy resin composition may comprise further additives in either or both of components **K1** and **K2.** These are, for example:
- solvents, film forming auxiliaries or extenders such as toluene, xylene, methylethyl ketone, 2-ethoxyethanol, 2-ethoxyethyl acetate, benzyl alcohol, ethylene glycol, diethylene glycol butyl ether, dipropylene glycol butyl ether, ethylene glycol butyl ether, ethylene glycol phenyl ether, N-methylpyrrolidone, propylene glycol butyl ether, propylene glycol phenyl ether, diphenylmethane, diisopropylnaphthalene, mineral oil fractions such as, for example, Solvesso types (from Exxon), aromatic hydrocarbon resins, in particular phenol group containing types, sebacates, phthalates, organic phosphoric and sulfonic esters and sulfonamides;
- anti-corrosion agents, also called corrosion inhibitors, in particular layered minerals, such as ground Phlogopite and micronized Muscovite, and modified hydrotalcites (MHTs), also called "layered double hydroxides" (LHDs), organic corrosion inhibitors such as amines, urea, mercaptobenzothiazole (MBT), benzotriazole and toluene triazole, aldehydes, heterocyclic nitrogen compounds, sulfur-containing compounds and acetylenic compounds and also ascorbic acid, succinic acid, tryptamine, caffeine and extracts of natural substances;
- reactive dilutants, e.g., epoxy reactive dilutants which have been mentioned above, epoxidized soy oil or flax oil, compounds having acetoacetate groups, in particular acetoacetylated polyols, butyrolactone as well as, moreover, isocyanates and silicones having reactive groups;
- polymers such as, e.g., polyamides, polysulfides, polyvinylformal (PVF), polyvinylbutyral (PVB), polyurethanes (PUR), polymers containing carboxylic groups, polyamides, butadiene-acrylonitrile copolymers, styrene-acrylonitrile copolymers, butadiene-styrene-copolymers, homo- or copolymers of unsaturated monomers, in particular of the group comprising ethylene, propylene, butylene, isobutylene, isoprene, vinyl acetate, and alkyl(meth)acrylates, in particular chlorosulfonated polyethylenes and polymers containing fluorine, sulfonamide-modified melamines, and cleaned montan waxes;
- fibers, for example, of plastics, carbon, or glass;
- pigments, for example, titanium dioxide or iron oxides or organic pigments;
- rheology modifiers such as, in particular, thickeners, for example, sheet silicates such as bentonites, derivatives of castor oil, hydrogenated castor oil, polyamides, polyurethanes, urea compos, pyrogenic silicic acids, cellulose ethers, and hydrophobically modified polyoxyethylenes;
- adhesion promoters, for example, organoalkoxysilanes such as 3-glycidoxypropyltrimethoxysilane, 3-aminopropyltrimethoxysilane, N-(2-aminoethyl)-3-aminopropyltrimethoxysilane, N-(2-aminoethyl)-N'[3-(trimethoxysilyl)propyl]ethylenediamine, 3-ureidopropyltrimethoxysilane, 3-chloropropyltrimethoxysilane, vinyltrimethoxysilane, or the corresponding organosilanes with ethoxy groups or (poly)etheroxy groups instead of methoxy groups;
- oxidation, heat, light, and UV radiation stabilizers;
- flame retardants, in particular compounds such as alumina (Al(OH)₃; also called ATH for "aluminum trihydrate"), magnesium hydroxide (Mg(OH)₂; also called MDH for "magnesium dihydrate"), ammonium sulfate ((NH₄)₂SO₄), boric acid (B(OH)₃), zinc borate, melamine borate, and melamine cyanurate; compounds containing phosphorus such as ammonium phosphate ((NH₄)₃PO₄), ammonium polyphosphate, melamine phosphate, melamine pyrophosphate, triphenyl phosphate, diphenyl cresyl phosphate, tricresyl phosphate, triethyl phosphate, tris-(2-ethylhexyl) phosphate, trioctyl phosphate, mono-, bis-, and tris(isopropylphenyl) phosphate, resorcinolbis(diphenyl phosphate), resorcinol diphosphate oligomer, tetraphenylresorcinol diphosphite, ethylendiamine diphosphate, and bisphenol A bis(diphenyl phosphate); halogen-containing compounds such as chloroalkylphosphates, in particular tris(chloroethyl) phosphate, tris(chloropropyl) phosphate, and tris(dichloroisopropyl) phosphate, polybrominated diphenyl ethers, in particular decabromodiphenyl ether, polybrominated diphenyl oxide, tris[3-bromo-2,2-bis(bromomethyl)propyl] phosphate, tetrabromo bisphenol A, bis(2,3-dibromopropyl ether) of bisphenol A, brominated epoxy resins, ethylene-bis(tetrabromophtalimide), ethylenebis(dibromonorbornanedicarboximide), 1,2-bis-(tribromophenoxy)ethane, tris(2,3-dibromopropyl) isocyanurate, tribromophenol, hexabromocyclododecane, bis(hexachlorocyclopentadieno)cyclooctane, and chloroparaffins; as well as combinations of a halogen-containing compounds and antimony trioxide (Sb₂O₃), or antimony pentoxide (Sb₂O₅);
- surfactants such as, for example, wetting agents, flow control agents, deaerating agents or defoaming agents;
- biocides, such as, for example, algicides, fungicides or substances that inhibit fungal growth.

It is clear and known to a person skilled in the art which additives may be added to the resin component **K1** and which may be added to the hardener component **K2.** Here, in particular, it has to be ensured that the storage stability is not or only slightly impaired by such additives. Thus, it is clear to a person skilled in the art that a polyamine will react with epoxides in the resin component **K1** and can consequently only be comprised in the hardener component **K2.**

In preferred embodiments, the multi-component epoxy resin composition contains in either one or both of components **K1** and **K2** additives, preferably selected from the list consisting of adhesion promoters, wetting agents, and degassing agents, with an amount of between 0.1 and 5 wt.-%, preferably between 0.25 and 4 wt.-%, in particular between 0.5 and 3 wt.-%, based on the combination of components **K1** and **K2.**

In the epoxy resin composition, the ratio of the number of amine groups which are reactive toward epoxide groups relative to the number of epoxide groups is preferably in the range of 0.7 to 1.5, in particular 0.8 to 1.2.

In the epoxy resin composition, the weight ratio of epoxy resin **A,** hardener **B,** impact modifier **I,** and filler **F** is preferably in the range of **A** : **B** : **I** : **F** = 1 : (0.25-1) : (0.25-1) : (1-4), in particular = 1 : (0.3-0.5) : (0.3-0.5) : (1.5-3.5).

### Component K3

The third component **K3** of the multi-component epoxy resin composition consists of an aqueous solution of at least one metal salt **M,** wherein said solution contains between 20 parts by weight and 80 parts by weight, preferably between 30 parts by weight and 70 parts by weight, in particular between 40 parts by weight and 60 parts by weight, of said metal salt **M,** based on 100 parts per weight of water is said aqueous solution.

Furthermore, the weight ratio of component **K2** to component **K3** is in all embodiments between 100 : 0.3 and 100 : 10, in particular between 100 : 0.5 and 100 : 7.5, preferably between 100 : 1 and 100 : 5, most preferably between 100 : 1.5 and 100 : 3.

Metal salt **M** plays a crucial role in the present invention. However, the effect is only achieved when the salt is fully dissolved in water, within the amount range specified above. It was surprisingly found that an aqueous solution of metal salt **M** leads to synergistic effects that surpass the effect of solid salt **M** and water used individually. While non-dissolved metal salts M can accelerate the curing of epoxy resin compositions, and pure water can lead to similar effects, the found effects of an aqueous solution as defined above has an unexpectedly higher accelerating effect and even leads to surprising improvement of mechanical properties of the cured epoxy resin composition.

Suitable as metal salt **M** are in principle all water-soluble salts based on metal cations and inorganic or organic anions.

For example, suitable are salts of Na, Ca, Mg, K, Be, Sr, Ba, La, and the transition metals, as long as they are able to form stable solutions in water within the claimed range.

Preferred are magnesium or calcium salts, preferably a calcium salt.

Most preferred is Ca, as calcium used as metal cation is especially active as accelerator and leads to mechanical improvements of the composition, it is non-toxic, readily available and inexpensive.

Preferred anions of metal salt **M** include chlorate and nitrate anions. Most preferred is nitrate. Nitrate leads to an especially accelerating component K3 and unexpectedly allows for improvement of mechanical properties of the cured epoxy resin composition. Furthermore, nitrate has low toxicity, is readily available, and inexpensive.

The most preferred metal salt **M** is thus Ca(NO₃)₂.

It is possible to use a mixture of different metal salts **M** within component **K3.**

Component **K3** contains between 20 parts by weight and 80 parts by weight, preferably between 30 parts by weight and 70 parts by weight, in particular between 40 parts by weight and 60 parts by weight, of said metal salt **M,** based on 100 parts per weight of water is said aqueous solution. Most preferably, a solution of approximately 50 weight parts of metal salt **M** dissolved in 100 weight parts of water is used. This concentration leads to the optimal accelerating effect and it can be mixed into components **K1** and **K2** with low enough amounts that the curing and mechanical properties of the epoxy resin composition are not affected detrimentally.

Component **K3** can be produced simply by dissolving the metal salt **M** in water. It is preferred to use distilled or osmotically purified water, but also tap water can be used if it is not severely polluted by substances that may interfere with the epoxy resin composition.

One advantage of the present invention is that component **K3** may be prepared on site, meaning that only solid metal salt **M** has to be transported and stored, while component **K3** can be produced simply by dissolving the salt in commonly available water in the desired amount. This offers the advantage that lower transportation costs and storage requirements are necessary.

Component **K3** of the present invention can be used with virtually any available two-component amine-curing epoxy resin composition, and by increasing the concentration of metal salt **M,** higher accelerating activity can be established when using a slower curing epoxy resin composition.

Apart from water and metal salt **M,** component **K3** may contain further additives. Such additives include colorants, solution stabilizers, surfactants, biozides, stabilizers, and other additives that do not interfere with the homogeneity of the aqueous solution of component **K3** or do not detrimentally affect the epoxy resin composition.

The components **K1** and **K2** and **K3** of the epoxy resin composition are stored in separate containers and only mixed before or during application. A suitable container for storing the resin **K1** or hardener **K2** component is in particular a barrel, a hobble, a bag, a bucket, a can, a cartridge or a tube. Component K3 may be stored in any water-tight container, for example a glass jar, a bag, a bucket, or any other suitable container. The components are recyclable, which means that they can be stored for several months to a year or longer before use, without changing in their respective properties to a degree relevant to their use. For the application of the epoxy resin adhesive, the resin and the hardener component **K1** and **K2** and accelerator component **K3** are mixed together shortly before or during the application.

The mixing of the components takes place by means of a suitable method. The mixing can be continuous or batchwise. If the mixing takes place before the application, care must be taken that the mixing of the components and the application does not take too much time, since this can lead to disturbances, for example to a slowed or incomplete buildup of the adhesion. The mixing takes place in particular at ambient temperature, which is typically in the range of about 0 to 40°C, preferably at about 5 to 30°C.

When mixing the components, the curing begins by chemical reaction. In this case, the epoxide groups react with the amino hydrogen-carrying amino groups and any other groups which are reactive toward epoxide groups and ring-open to give amino alcohol units. Further epoxide groups react with one another under anionic polymerization, in particular catalyzed by dimethylamino groups. The dissolved metal salt **M** further accelerates the curing. As a result of these reactions, the adhesive cures to a crosslinked material. It is known to the person skilled in the art that primary amino groups are "difunctional" towards epoxide groups, meaning they can react with two separate epoxy groups.

Curing takes place especially at ambient temperature or temperatures down to 2°C. It typically extends over a few hours to days until it is largely completed under the conditions given. Important influencing factors are the temperature, the stoichiometry and the presence of accelerators.

As a result of the curing reaction, a cured adhesive is obtained.

Preferably, the application and curing of the adhesive takes place at ambient temperature, in particular at a temperature in the range of 0 to 40°C, in particular 5 to 30°C. This allows a particularly simple handling of the adhesive and is particularly advantageous outdoors, on construction sites and in unheated industrial buildings.

Another aspect of the invention is a method for accelerated curing of a multi-component epoxy resin composition, comprising the steps
a) providing a two-component epoxy resin composition consisting of a first component **K1** and a second component **K2** as described above;
b) providing a third component **K3** as described above;
c) mixing components **K1, K2,** and **K3** in any order;
d) applying the mixture of components **K1, K2,** and **K3** to at least one substrate;
e) letting the applied mixture cure spontaneously at a temperature of at least 2°C.

All preferred embodiments of component **K1, K2,** and **K3** described further above for the composition itself also apply to the method.

In preferred embodiments of this method, in step d), the mixture cures at a temperature of between 5°C and 30°C, preferably between 10°C and 25°C.

In the same or other preferred embodiments of this method, said at least one substrate is selected from concrete, mortar, cement screed, fiber cement, brick, tile, natural stone, masonry, steel, copper, iron, aluminum, wood, carbon fiber fabric, polyester, PVC, epoxy resin, glass, and painted surfaces.

The surface of the substrate may be surface-treated if necessary prior to application of the adhesive. Such pretreatments include, in particular, physical and / or chemical cleaning processes, for example grinding, sandblasting, shot peening, brushing and / or blowing off, as well as further treatment with cleaners or solvents or the application of an adhesion promoter, a primer solution or a primer.

In another preferred embodiment, said substrate is a part of a vehicle, in particular a road vehicle, an air vehicle, or a water vehicle. Said vehicle is preferably a bus, a truck, a train, a tramway, an airplane, a helicopter, a ship, a boat, or a submarine. Most preferred vehicles are large road vehicles, in particular buses, or air vehicles.

Another aspect of the present invention is the use of a multi-component epoxy resin composition as described above as adhesive, sealant, or coating, in particular for construction or refurbishment of buildings or civil engineering structures.

All preferred embodiments of component K1, K2, and K3 of the multi-component composition described further above for the composition itself also apply to this use.

Another aspect of the present invention is the use of an aqueous solution of at least one metal salt M as curing accelerator for two-component epoxy resin compositions, wherein said solution contains between 20 parts by weight and 80 parts by weight, preferably between 30 parts by weight and 70 parts by weight, in particular between 40 parts by weight and 60 parts by weight, of said metal salt **M,** based on 100 parts per weight of water is said aqueous solution.

The two components of said two-component epoxy resin compositions refer to an epoxy resin component and a hardener component. It is possible to use a further component, for example a hydraulic binder component, as well.

All commercially available two-component amine-curing epoxy resin compositions are suitable for this use. Such compositions are for example commercially available under the trade names Sikadur^{®} by Sika. Examples thereof include Sikadur^{®}-31+, Sikadur^{®}-32+, and Sikadur^{®}-42+ VLE Hot Climate, all available from Sika.

Preferably, two-component epoxy resin compositions consisting of components **K1** and **K2** as described above are employed as two-component epoxy resin compositions in this use. Also preferably, aqueous solutions of at least one metal salt **M** corresponding to components **K3** as described above are employed in this use. All preferred embodiments of component **K1, K2,** and **K3** as described further above for the multi-component composition itself also apply to this use.

In preferred embodiments of the use of an aqueous solution of at least one metal salt **M** as curing accelerator for two-component epoxy resin compositions, said metal salt **M** is a calcium salt.

In the same or further preferred embodiments of the use of an aqueous solution of at least one metal salt **M** as curing accelerator for two-component epoxy resin compositions, said metal salt **M** is a nitrate or a chlorate salt, preferably a nitrate salt.

### Examples

Examples are given below which illustrate the invention further but do not limit the scope of the invention in any way and merely illustrate some of the possible embodiments. "Standard conditions" or "norm climate" ("NK") refers to a temperature of 23°C and 50% relative humidity (r.h.).

### Test Methods

The following test methods were employed:

### Compressive Strength and flexural strength (EN-196-1)

### Compressive strength (CS)

Prisms of the sample to be tested with dimensions of 40x40x160 mm were prepared in a steel formwork. After 1 or 7 days at 23°C and 50% r.h. the samples were loaded under compressive stress at a constant rate of 2.4 kN/s with a preload of 0.5 kN until their breaking point or until a first crack appeared. The value for the compressive strength in each case was read off at the maximum force.

### Flexural strength (FS)

Prisms of the sample to be tested with dimensions of 40x40x160 mm were prepared in a steel formwork. After 7 days at 23°C and 50% r.h. the samples were loaded in a 3-point bending fixture and bended with 0.5kN/s until their breaking point. The force value for the flexural strength in each case was read off at the breaking point.

### Tensile Strength (TS), Elongation at Break (EOB) and Elastic Modulus (E-Mod) (DIN EN ISO 527)

These mechanical properties were determined by applying and curing the mixed adhesive in the standard climate into a silicone mold to form dumbbell-shaped bars having a thickness of 10 mm, a length of 150 mm, a land length of 80 mm and a land width of 10 mm. After 7 days curing time (NK) the test specimens were released from the mold. The specimens were measured under standard conditions at a pulling speed of 2 mm / min. The tensile strength, elongation at break and the modulus of elasticity 0.05-0.25% were determined according to DIN EN ISO 527.

### Curing rate measurements

Curing rate was determined in comparative studies either by measuring the time to exotherm peak temperature of a curing sample or by measuring the time until a certain Shore A hardness was reached in a sample.

### Time to exotherm peak temperature (TEPT)

The time to exotherm peak temperature (TETP) and the exotherm peak temperature (T^{a}) were determined at normal climate with a freshly mixed sample of 110 g in a plastic box with a diameter of 63 mm and a height of 65 mm according to ASTM D2471-99. The time to reach this temperature and the peak measured temperature were recorded. A faster reach of the exotherm peak temperature means a faster curing rate. The respective curing temperature and other relevant conditions are stated in each experiment.

### Time to Shore A hardness (TSAH)

The time to reach a specific Shore A hardness was determined with Shore A hardness measurements according to DIN 53505 on samples with a layer thickness of 10 mm and by measuring the time in intervals of 10 min, measured at 23°C. The respective curing temperature and other relevant conditions are stated in each experiment.

### Used two-component epoxy resin compositions

The used two-component epoxy resin compositions are listed in Table 1.

The adhesives in Table 1 are typical commercial two- or three-component epoxy resin compositions with varying formulations, e.g., regarding fillers and specific reactive ingredients. However, all these adhesives in Table 1 comprise a first component **K1** and a second component **K2.** In each of these adhesives, the epoxy-functional compounds in epoxy resin **A** and optionally reactive diluent in each respective component **K1** are selected from liquid bisphenol A diglycidyl ethers, liquid bisphenol F diglycidyl ethers, C12/C14-alkyl monoglycidyl ethers, diglycidyl ether of 1.6-hexanediol, diglycidyl ether of 1,4-butanediol, and combinations thereof. Furthermore, in each of these adhesives, the respective second component **K2** comprises a hardener **B** that is a compound or a mixture of compounds selected from the group consisting of poly(ethyleneimines), polyamidoamines, amino group terminated butadiene/acrylonitrile copolymers and polyamines.

**Table 1: Used two-component epoxy resin adhesives.**

| **Adhesive (supplier)** |
|---|
| Sikadur^{®}-31+ ("SD-31") (Sika Schweiz AG) |
| Sikadur^{®}-32+ ("SD-32") (Sika Schweiz AG) |
| Sikadur^{®}-42+ VLE Hot Climate ("SD-42 VLE") (Sika Schweiz AG) |
| Sikadur-Combiflex^{®} CF ("Combiflex") (Sika Schweiz AG) |

### Examples of components K3

A series of components **K3** were produced by dissolving specific amounts of respective metals salts **M** in distilled water. The details of the thus produced components K3-1 to K3-9 are shown in Table 2. The respective amounts in Table 2 describe parts by weight of each metal salt added to 100 parts by weight of distilled water.

**Table 2: Example components K3. * not according to the invention.**

| | **K3-1*** | **K3-2** | **K3-3** | **K3-4** | **K3-5** | **K3-6** | **K3-7*** | **K3-8*** | **K3-9** |
|---|---|---|---|---|---|---|---|---|---|
| Ca(NO₃)₂ | 0 | 25 | 50 | 80 | 0 | 0 | 0 | 0 | 0 |
| Ca(ClO₄)₂ | 0 | 0 | 0 | 0 | 50 | 70 | 0 | 0 | 0 |
| (NH₄)H₂PO₄ * | 0 | 0 | 0 | 0 | 0 | 0 | 50 | 80 | 0 |
| Mg(NO₃)₂ | 0 | 0 | 0 | 0 | 0 | 0 | 0 | 0 | 50 |

For testing, a homogenous mixture of above components **K3** detailed in Table 2 was mixed with the hardener component **K2** of each two-component epoxy resin composition used in each respective example. The epoxy resin components **K1** and the hardener components **K2** of each commercial epoxy resin compositions were then mixed according to the specifications for the respective commercial products. For each example, the resin component **K1** and the hardener component **K2** (containing the respective component **K3**) were then processed into a homogenous paste by means of the centrifugal mixer and tested immediately as detailed above.

The details and results of these experiments are shown in Table 3.

### Tests on curing rate acceleration

The following Tables 3 and 4 show the influence of the addition of component **K3** on the curing rate, as measured in terms of time to reach Shore A hardness and as time to reach exotherm peak temperature.

**Table 3: Time to Shore A = 40 measurements at 20°C. * not according to the invention. ¹ weight parts of each respective K3 admixed to 100 weight parts of the respective hardener component K2. Ambient temperature during curing was 20°C in all experiments. The numerical results denote the time in minutes, until a Shore A value of 40 was reached in each experiment. The shorter the time, the faster the curing rate. "n/m" means not measured.**

| *Adhesive* | *SD-31* | | *Combiflex* | | *SD-32* | |
|---|---|---|---|---|---|---|
| Amount **K3** in **K2** ¹ | **K3-1*** | **K3-3** | **K3-1*** | **K3-3** | **K3-1*** | **K3-3** |
| 0* | 285 | 285 | 240 | 240 | 185 | 185 |
| 0.3 | 270 | 250 | 230 | 220 | 145 | 155 |
| 1.5 | 220 | 180 | 140 | 160 | 110 | 75 |
| 3 | 200 | 140 | 150 | 130 | 95 | 50 |
| 5 | n/m | 130 | 190 | 100 | 150 | n/m |
| 10 | 200 | 80 | 280 | n/m | 270 | n/m |

Table 3 shows that addition of a component **K3** according to the invention to a hardener component **K2** leads to significant curing acceleration over a broad concentration rage. Addition of pure water initially leads to a smaller acceleration, but at higher concentrations, this effect is reversed.

**Table 4: Exotherm peak temperature T^{a} and time to reach the same (TEPT) at 20°C.**

| *Adhesive* | *SD-31* | | *Combiflex* | | *SD-32* | | *SD-42 VLE* | |
|---|---|---|---|---|---|---|---|---|
| Amount **K3-3** in **K2** 1 | T^{a} [°C] | TEPT [min] | T^{a} [°C] | TEPT [min] | T^{a} [°C] | TEPT [min] | T^{a} [°C] | TEPT [min] |
| 0* | 44 | 166 | 67 | 76 | 120 | 50 | 29 | 360 |
| 0.3 | 58 | 75 | 61 | 79 | 116 | 20 | 30 | 345 |
| 1.5 | 60 | 94 | 65 | 50 | 130 | 25 | 30 | 275 |
| 3 | 61 | 62 | 65 | 38 | 120 | 35 | 31 | 225 |
| 5 | 58 | 57 | 69 | 30 | 116 | 19 | 33 | 150 |
| 10 | n/m | n/m | 57 | 47 | 120 | 17 | n/m | n/m |

| | | | | | | | | |
|---|---|---|---|---|---|---|---|---|
| * not according to the invention. ¹ weight parts of **K3-3** admixed to 100 weight parts of the respective hardener component **K2.** Ambient temperature during curing was 20°C in all experiments. The numerical results denote the time in minutes, until T^{a} was reached in each experiment (TEPT) and the exotherm peak temperature T^{a}. The shorter the time, the faster the curing rate. "n/m" means not measured. | | | | | | | | |

Table 4 shows that the exotherm peak temperatures themselves are hardly affected by the addition of component **K3.** However, a clear accelerating effect is visible when component **K3** is added, which increases with the added amount. The time to reach exotherm peak temperature is a clear indicator of the curing rate of a composition.

### Tests on mechanical performance

The following Table 5 shows the influence of the addition of component **K3** on the mechanical properties of the cured epoxy resin adhesives.

**Table 5: Compressive and flexural strength tests. * not according to the invention. ¹ weight parts of K3-3 admixed to 100 weight parts of the respective hardener component K2. Ambient temperature during curing was 20°C in all experiments. The numerical results denote the compressive strength (CS) and the flexural strength (FS) in each experiment after curing for: ** 6h at 20 °C, *** 8h at 20 °C, or **** 1d at 20°C. "n/m" means not measured. "n/p" means that this value could not be measured due to insufficient curing.**

| *Adhesive* | *SD-31* | | | | *SD-32***** | | *SD-42 VLE***** | |
|---|---|---|---|---|---|---|---|---|
| Amount **K3-3** in **K2** 1 | CS** [MPa] | FS** [MPa] | CS*** [MPa] | FS*** [MPa] | CS [MPa] | FS [MPa] | CS [MPa] | FS [MPa] |
| 0* | n/p | n/p | 9 | 16 | 35 | 18 | 26 | 13 |
| 1.5 | 18 | 11 | 13 | 25 | 47 | 28 | 41 | 18 |
| 3 | 31 | 16 | 36 | 19 | n/m | n/m | n/m | n/m |
| 5 | n/m | n/m | n/m | n/m | 23 | 16 | 72 | 26 |
| 10 | n/m | n/m | n/m | n/m | n/m | n/m | 66 | 25 |

The results in Table 5 show that there is a surprising improvement of mechanical performance, especially at low addition amounts of **K3** to the respective **K2.** At higher addition amounts, this effect is less prominent or even reversed.

### Tests on metal salt M concentration in component K3

The following Table 6 shows the influence of the metal salt **M** concentration of component **K3** on the curing rate.

**Table 6: Time to Shore A = 40 measurements at 20°C. ¹ in each experiment, 1.5 weight parts of K3 were admixed to 100 weight parts of the respective hardener component K2. Ambient temperature during curing was 20°C in all experiments. The numerical results denote the time in minutes, until a Shore A value of 40 was reached in each experiment. The shorter the time, the faster the curing rate. "n/m" means not measured.**

| **K3** in **K2** ¹ | *SD-31* | *Combiflex* |
|---|---|---|
| K3-2 | 175 | 180 |
| K3-3 | 180 | 180 |
| K3-4 | 175 | n/m |

The data presented in Table 6 shows that the accelerating effect is not linearly dependent on the salt concentration. Already low salt concentrations show a clear accelerating effect. Below 20 weight parts of metal salt **M** per 100 weight parts of water in component **K3,** however, the concentration was found to be too low to have an accelerating effect without having to add excessive amounts of component **K3,** which might have undesired effects due to the high amount of water added.

### Tests on low curing temperatures

The following Tables 7 and 8 show the influence of the addition of component K3 on the curing rate, as measured in terms of time to reach Shore A hardness, and on the mechanical performance after curing of samples cured at low temperatures.

**Table 7: Time to Shore A = 40 measurements at 2°C and 5°C. * not according to the invention. ¹ 1.5 weight parts of K3-3 admixed to 100 weight parts of the respective hardener component K2. Ambient temperature during curing was 2°C or 5°C, respectively. The numerical results denote the time in hours, until a Shore A value of 40 was reached in each experiment. The shorter the time, the faster the curing rate.**

| *Adhesive* | *SD-31* | | *Combiflex* | |
|---|---|---|---|---|
| Curing temperature | without **K3*** | **K3-3** ¹ | without **K3*** | **K3-3**¹ |
| 2°C | 24 | 18 | 35 | 20 |
| 5°C | 19 | 15 | 19 | 18.5 |

Table 7 shows that even at low temperatures down to 2°C, addition of component K3 has a remarkable accelerating effect on both studied adhesives.

At lower temperature of 2°C, the effect is even stronger that at 5°C.

### Tests on different metal salts M in component K3

The following Tables 8 and 9 show the influence of other types of metal salt **M** in component **K3** on the curing rate and on compressive strength after curing.

**Table 8: Time to Shore A = 40 measurements at 20°C. * not according to the invention. ¹ weight parts of each respective K3 admixed to 100 weight parts of the respective hardener component K2. Ambient temperature during curing was 20°C in all experiments. The numerical results denote the time in minutes, until a Shore A value of 40 was reached in each experiment. The shorter the time, the faster the curing rate. "n/m" means not measured.**

| *Adhesive* | *SD-31* | | *Combiflex* | |
|---|---|---|---|---|
| Amount **K3** in **K2** ¹ | **K3-5** | **K3-6** | **K3-5** | **K3-6** |
| 0* | 285 | 285 | 240 | 240 |
| 0.3 | n/m | 300 | 250 | 250 |
| 1.5 | 185 | 170 | 200 | 190 |
| 3 | 100 | 95 | 180 | 160 |
| 5 | 70 | 60 | 150 | 140 |

**Table 9: Compressive strength tests. * not according to the invention. ¹ in each experiment with addition of a component K3, 1.5 weight parts of K3 were admixed to 100 weight parts of the respective hardener component K2. Ambient temperature during curing was 20°C in all experiments. The numerical results denote the compressive strength (CS) in each experiment after curing during 1d at 20°C.**

| **K3** in **K2** ¹ | *SD-31* | *Combiflex* |
|---|---|---|
| without **K3*** | 50 | 46 |
| K3-5 | 46 | 40 |
| K3-6 | 57 | 49 |

Tables 8 and 9 show that the inventive effects can be achieved with other metals salts **M** as well.

### Tests on dissolution of metal salts M in component K3

The following Table 10 shows the influence of the dissolution state of metal salt **M** in component **K3** on the curing rate. For this study, comparative experiments with non-dissolved (solid powder) salts **M** were performed.

**Table 10: Time to reach exotherm peak temperature (TEPT) at 20°C. * not according to the invention. ¹ in each experiment, either 1.5 or 5 weight parts of K3 or the respective equal amount of powder salt were admixed to 100 weight parts of the respective hardener component K2, as defined in each experiment. Ambient temperature during curing was 20°C in all experiments. The numerical results denote TEPT in minutes, "n/m" means not measured.**

| **K3** in **K2**¹ | *SD-31* | *Combiflex* | *SD-32* | *SD-42 VLE* |
|---|---|---|---|---|
| without **K3*** | 166 | 76 | 50 | 360 |
| K3-3 (1.5 weight parts) | 94 | 50 | 25 | 275 |
| Ca(NO₃)₂ (1.5 weight parts)* | 162 | 105 | n/m | n/m |
| K3-3 (5 weight parts) | 57 | 30 | 19 | 150 |
| Ca(NO₃)₂ (5 weight parts)* | 141 | n/m | 50 | 312 |
| K3-9 (1.5 weight parts) | 83 | 68 | n/m | n/m |
| Mg(N0₃)₂ (1.5 weight parts)* | 135 | 92 | n/m | n/m |

Tables 8 to 10 show that various different metal salts **M** have the ability to accelerate curing and to improve mechanical properties when used as aqueous solution in a component **K3** according to the invention. On the other hand, Table 10 shows that the addition of salt in powder form does not lead to a significant curing acceleration. Together with the data further above including K3-1 this proves the synergistic effect brought about by the solution of metal salt **M** as component **K3** according to the invention.

Further tests were done with components K3-7 and K3-8 (as defined in Table 2). These components **K3** were not able to accelerate the curing, nor were they able to improve the mechanical properties of the tested epoxy resin composition. This shows that non-metal salts such as (NH₄)H₂PO₄ are not suitable within the meaning of this invention.

## Claims

1. A multi-component epoxy resin composition, comprising
- a first component K1 comprising
- at least one epoxy resin **A** that contains on average more than one epoxy group per molecule;
- optionally at least one reactive diluent having one epoxy group per molecule;
- optionally further additives; and
- a second component K2 comprising
- at least one amine hardener B for epoxy resins;
- optionally further additives; and
- a third component K3 consisting of
- an aqueous solution of at least one metal salt M, wherein said solution contains between 20 parts by weight and 80 parts by weight, preferably between 30 parts by weight and 70 parts by weight, in particular between 40 parts by weight and 60 parts by weight, of said metal salt M, based on 100 parts per weight of water is said aqueous solution;
wherein the weight ratio of component **K2** to component **K3** is between 100 : 0.3 and 100 : 10, preferably between 100 : 1 and 100 : 5.

2. The multi-component epoxy resin composition according to claim 1, **characterized in that** said metal salt **M** is a magnesium or calcium salt, preferably a calcium salt.

3. The multi-component epoxy resin composition according to any of claims 1 or 2, **characterized in that** said metal salt **M** is a nitrate or a chlorate salt, preferably a nitrate salt.

4. The multi-component epoxy resin composition according to any of claims 1 to 3, **characterized in that** the composition contains at least one impact strength modifier I in either one or both of components **K1** and **K2.**

5. The multi-component epoxy resin composition according to any of claims 1 to 3, **characterized in that** the composition contains at least one filler **F** in either one or both of components **K1** and **K2.**

6. The multi-component epoxy resin composition according to any of claims 1 to 5, **characterized in that** the molar ratio of all amino groups in component **K2** that are reactive towards epoxide groups relative to the number of epoxide groups in component **K1** is in the range of 0.7 to 1.5, in particular 0.8 to 1.2.

7. The multi-component epoxy resin composition according to any of claims 1 to 6, **characterized in that** the amines in amine hardener **B** in component **K2** are selected from aliphatic polyamines, aromatic polyamines, cycloaliphatic polyamines, polyaminoamides, phenalalkamines, phenalalkamides, and mixtures thereof.

8. The multi-component epoxy resin composition according to any of claims 1 to 7, **characterized in that** the epoxy-functional compounds in epoxy resin **A** and optionally reactive diluent in component **K1** are selected from liquid bisphenol A diglycidyl ethers, liquid bisphenol F diglycidyl ethers, C12/C14-alkyl monoglycidyl ethers, diglycidyl ether of 1.6-hexanediol, diglycidyl ether of 1,4-butanediol, and combinations thereof.

9. A method for accelerated curing of a multi-component epoxy resin composition, comprising the steps
a) providing a two-component epoxy resin composition consisting of a first component **K1** and a second component **K2** according to any of claims 1 to 8;
b) providing a third component **K3** according to any of claims 1 to 8;
c) mixing components **K1, K2,** and **K3** in any order;
d) applying the mixture of components **K1, K2,** and **K3** to at least one substrate;
e) letting the applied mixture cure spontaneously at a temperature of at least 2°C.

10. The method according to claim 9, **characterized in that** in step d), the mixture cures at a temperature of between 5°C and 30°C, preferably between 10°C and 25°C.

11. The method according to any of claims 9 or 10, **characterized in that** said at least one substrate is selected from concrete, mortar, cement screed, fiber cement, brick, tile, natural stone, masonry, steel, copper, iron, aluminum, wood, carbon fiber fabric, polyester, PVC, epoxy resin, glass, and painted surfaces.

12. Use of a multi-component epoxy resin composition according any of claims 1 to 8 as adhesive, sealant, or coating, in particular for construction or refurbishment of buildings or civil engineering structures.

13. Use of an aqueous solution of at least one metal salt **M** as curing accelerator for two-component epoxy resin compositions, wherein said solution contains between 20 parts by weight and 80 parts by weight, preferably between 30 parts by weight and 70 parts by weight, in particular between 40 parts by weight and 60 parts by weight, of said metal salt **M,** based on 100 parts per weight of water is said aqueous solution.

14. The use according to claim 13, **characterized in that** said metal salt **M** is a magnesium or calcium salt, preferably a calcium salt.

15. The use according to any of claims 13 or 14, **characterized in that** said metal salt **M** is a nitrate or a chlorate salt, preferably a nitrate salt.
